# EUROPÄISCHE PATENTSCHRIFT

(11) **EP 0 673 708 B1**
(45) Veröffentlichungstag und Bekanntmachung des Hinweises auf die Patenterteilung: **12.08.1998**
(21) Anmeldenummer: 95104155.7
(22) Anmeldetag: 21.03.1995
(51) Int. Cl.: B23Q 3/00, B23C 3/12

(54) **Vorrichtung zum Bearbeiten der Ecken von Rahmen, insbesondere Fenster- oder Türrahmen.**
Device for treatment of corner joints of frames, particularly window or door frames
Dispositif pour le traitement des joints d'angle pour châssis, particulièrement pour des châssis de fenêtre ou de porte

(30) Priorität: 21.03.1994 DE 4409654
(43) Veröffentlichungstag der Anmeldung: 27.09.1995
(73) Patentinhaber: ROTOX GmbH B. EISENBACH, D-65611 Brechen (DE)
(72) Erfinder: Eisenbach, Bernd, D 65611 Brechen (DE)
(74) Vertreter: Müller, Eckhard, Dr.

(56) Entgegenhaltungen:
- EP-A- 0 429 417
- DE-A- 4 006 317
- DE-U- 9 305 046
- US-A- 2 458 846

## Beschreibung

Die Erfindung bezieht sich auf eine Vorrichtung zum Bearbeiten der Rahmenecken von aus Kunststoff- oder Metallprofilstücken geschweißten oder aus Holzprofilstücken zusammengefügten Rahmen, wie bspw. Fenster- oder Türrahmen, mittels wenigstens einem verfahrbaren Bearbeitungswerkzeug, mit an den Rahmenaußenseiten zu liegen kommenden verschwenkbaren Anschlägen.

Derartige Verputzvorrichtungen für aus Kunststoff- oder Metallprofilen geschweißte, Rahmen, insbesondere für Fenster- oder Türrahmen, dienen dazu, die beim Schweißen der Profile an den Schweißnähten der Eckbereiche entstandenen, nach außen vorstehende Schweißraupen zu entfernen. Zum Verputzen der Sichtflächen des Rahmenecks werden Bearbeitungswerkzeuge entlang der Schweißnaht geführt, während zum Entfernen des am Außeneck des Rahmens senkrecht zur Rahmenebene entstandenen Schweißwulstes häufig Profilfräser eingesetzt werden.

Aus der DE-U-79 31 223 ist bereits eine derartige Vorrichtung zum Bearbeiten von Rahmenecken mit unterschiedlichen Rahmenwinkeln bekannt. Die an den Rahmenaußenseiten zu liegen kommenden Anschläge sind mittels einer Stellspindel mit einem Links- und Rechtsgewindeabschnitt verschwenkbar. Die Betätigungseinrichtung für die Anschläge ist in Art eines Gelenkvierecks ausgeführt, wobei abhängig von der Schwenklage der Anschläge die äußere Bearbeitungskante auf einer Geraden längs der Spindel hin und her wandert. Dies erweist sich jedoch als wesentlicher Nachteil bei CNC-gesteuerten Verputzvorrichtungen für Fenster- oder Türrahmen, da die äußere Bearbeitungskante des Rahmenecks immer an der gleichen Stelle zu liegen kommen sollte, so daß unabhängig vom Profil bzw. von der Profilbreite und von dem von den Profilschenkeln eingeschlossenen Winkel der Verfahrweg der Werkzeuge bis zum Rahmenaußeneck stets konstant ist. Andernfalls müßte bei jedem Profil bzw. jedem Winkel ein anderer Weg verfahren werden, was einen erheblichen Programmieraufwand und große Unsicherheiten bei der Bearbeitung darstellt. Ein wesentlicher Nachteil der bekannten Vorrichtung ist auch, daß aufgrund der sich in Richtung der Gehrung des Rahmenecks erstreckenden Stellspindel eine Bearbeitung der Unterseite des Rahmens nicht möglich ist.

Davon ausgehend liegt der Erfindung die Aufgabe zugrunde, eine Vorrichtung der eingangs genannten Art dahingehend zu verbessern, daß unabhängig von dem jeweiligen Winkel der beiden Profilschenkel des Rahmenecks und demgemäß der Schwenklage der Anschläge und unabhängig vom Profil bzw. seiner Breite die äußere Ecke des Rahmens jeweils an der gleichen Stelle innerhalb der Aufnahme bzw. der Bearbeitungsvorrichtung zu liegen kommt.

Zur Lösung der Aufgabe ist es nach der Erfindung vorgesehen, daß die Anschläge an kreissegmentförmigen Führungen geführt sind, deren Kreismittelpunkt auf einer Geraden liegt, welche durch die Bewegungsrichtung des wenigstens einen Bearbeitungswerkzeuges in Arbeitsstellung festgelegt ist. Hierdurch ist sichergestellt, daß die äußerste Kante des zu bearbeitenden Rahmenecks unabhängig von dem durch die Profilschenkel eingeschlossenen Winkel und unabhängig von der Breite des Profils oder der Profilart, wie bspw. Blend- oder Flügelrahmen, stets an der gleichen Stelle bzw. am gleichen Punkt zu liegen kommt. Da die jeweilige Bearbeitungsspitze genau im Zentrum der beiden Kreissegmentführungen liegt, ist der Verfahrweg der Bearbeitungswerkzeuge zum Bearbeiten des Rahmenaußenecks oder der Sichtflächen i. w. gleich bzw. auf ein Minimum reduziert.

Nach einer ersten besonderen Ausführungsform der Erfindung ist es vorgesehen, daß die Kreissegmentführungen unter Bildung eines Freiraums für das wenigstens eine Bearbeitungswerkzeug zur Bearbeitung der Rahmenunterseite mit seitlichem Abstand voneinander angeordnet sind. Hierdurch ist im Falle, daß die Kreissegmentführungen unterhalb der Auflage für die Rahmen angeordnet sind, ein problemloses Bearbeiten der Rahmenunterseite ermöglicht.

In einer weiteren Ausgestaltung der Erfindung ist es vorgesehen, daß insbesondere für stumpf- und spitzwinklige Rahmenecken die Anschläge für eine simultane Schwenkbewegung zwangsgekoppelt sind, was die Einstellung der Anschläge wesentlich vereinfacht. Selbstverständlich ist es nach der Erfindung auch möglich, daß die Anschläge unabhängig voneinander, bspw. für die Bearbeitung von Segmentbögen mit einem geraden Schenkel und einem Bogenanschluß in nicht symmetrischer Weise einstellbar sind.

Eine solche Zwangskopplung der beiden Anschläge läßt sich in konstruktiv besonders einfacher Weise mittels Hebelarmen realisieren, welche mit ihrem einen Ende an dem jeweiligen Anschlag und mit ihrem anderen Ende unter Kreuzung ihrer Hebelarme an Muttern von Spindeln mit entgegengesetzten Gewindegängen angelenkt sind.

Dabei sind nach einer Ausführungsform der Erfindung die Spindeln außerhalb des Bearbeitungsbereichs der Bearbeitungswerkzeuge, vorzugsweise im rechten Winkel zur Verfahrrichtung der Bearbeitungswerkzeuge angeordnet. Damit ist der Bereich, in welchem die Bearbeitungswerkzeuge verfahren werden, frei von dem Antriebsmechanismus für die Verstellung der Anschläge. Hierdurch ist erreicht, daß der auf der Aufnahme aufliegende Rahmen auch an seiner Unterseite simultan mit der Bearbeitung auf seiner Oberseite oder zeitversetzt bearbeitet werden kann, ohne daß der Rahmen für die Bearbeitung seiner Ober- und Unterseite gewendet werden muß.

Die Verschwenkung der Anschläge kann nach einer Ausgestaltung der Erfindung selbstverständlich auch mittels einer elektrischen oder pneumatischen Betätigungseinrichtung erfolgen. Bspw. kann anstelle von Spindeln eine pneumatische oder elektrische Verschwenkung der Hebelarme vorgenommen werden.

Nach einer weiteren Ausführungsform der Erfindung sind Spannmittel zur Festlegung des Rahmens vorgesehen, welche längsverschieblich an den Anschlägen angeordnet sind und mit kleiner werdendem Winkel zwischen den Anschlägen an diesen nach außen und bei sich vergrößerndem Winkel zwischen den Anschlägen an diesen nach innen in Richtung des Zentrums der Kreissegmentführungen verschoben werden. Hierdurch ist eine sicherer Halt des Rahmens innerhalb der Auflage gewährleistet. Darüber hinaus können durch die Längsverschiebbarkeit der Spannmittel an den Anschlägen auch kurze Schenkel mit stumpfen Winkeln bearbeitet werden. Bei einer festen Anordnung der Spannmittel an den Anschlagleisten wie bei den bekannten Vorrichtungen und einer Verlagerung der Spannmittel soweit nach außen, daß auch bei spitzwinkligen Rahmen dann ein genügender Freiraum für die Bearbeitungswerkzeuge vorhanden ist, entsteht bei der Bearbeitung stumpfwinkliger Rahmen das Problem, daß sich die Spanneinheiten zu weit von der zu bearbeitenden Ecke befinden, so daß das Rahmeneck vibriert und es zu einer unsauberen Bearbeitung kommt.

Im Rahmen der Erfindung liegt es auch, daß die Spannmittel derart zwangsgekoppelt mit den Anschlägen verbunden sind, daß sie sich beim Verschwenken der Anschläge in die jeweils gewünschte Richtung an den Anschlägen verschieben.

Hierzu ist es nach einer Ausgestaltung der Erfindung vorgesehen, daß die Spannmittel an, vorzugsweise in einer Ebene der Kreissegmentführungen für die Anschläge angeordneten, ebenfalls kreissegmentförmig ausgebildeten Führungen gelagert sind, deren Kreismittelpunkt gegenüber dem Kreismittelpunkt der Kreissegmentführungen für die Anschläge um einen Abstand auf der durch die Bewegungsrichtung der Bearbeitungswerkzeuge festgelegten Geraden versetzt ist. Der Abstand, um welchen die beiden Kreismittelpunkte voneinander versetzt sind, entspricht dem Maß, um welches die Spannmittel bei den jeweils üblicherweise vorkommenden Rahmen mit unterschiedlichen Breiten und Winkeln der Profilschenkel verschoben werden müssen. Durch die Zwangskoppelung ist eine vollautomatische Bearbeitung von Rahmen unterschiedlicher Breite und Rahmentyp, wie bspw. Z- oder T-Profil, Blend- oder Flügelrahmen, und unterschiedlichen Winkeln ermöglicht, ohne daß es zu Fehlfunktionen durch den Bediener kommen kann.

Weiterhin empfiehlt es sich nach der Erfindung, daß die Kreissegmentführungen für die Anschläge und/oder für die Spannmittel unterhalb der Aufnahme für den Rahmen angeordnet sind, um eine Werkstückbearbeitung simultan oder zeitversetzt von oben und von unten durchführen zu können.

Die vorliegende Erfindung wird in der nachfolgenden Beschreibung eines Ausführungsbeispieles anhand der Zeichnung erläutert.

Es zeigen:
- Figur 1: eine Aufnahme für eine Vorrichtung zum Bearbeiten von Rahmen nach dem Stand der Technik,
- Figur 2: eine mögliche Ausführungsform einer Aufnahme einer erfindungsgemäßen Vorrichtung für einen spitzwinkligen Rahmen,
- Figur 3: die Aufnahme gemäß Figur 2, jedoch in Arbeitsstellung für einen stumpfwinkligen Rahmen,
- Figur 4: eine Aufnahme für einen Rahmen gemäß Figur 2, jedoch mit zusätzlichen Spanneinheiten zur Festlegung des Rahmens in der Aufnahme und
- Figur 5: die Aufnahme gemäß Figur 4 jedoch in einer Aufnahmestellung für einen stumpfwinkligen Rahmen.

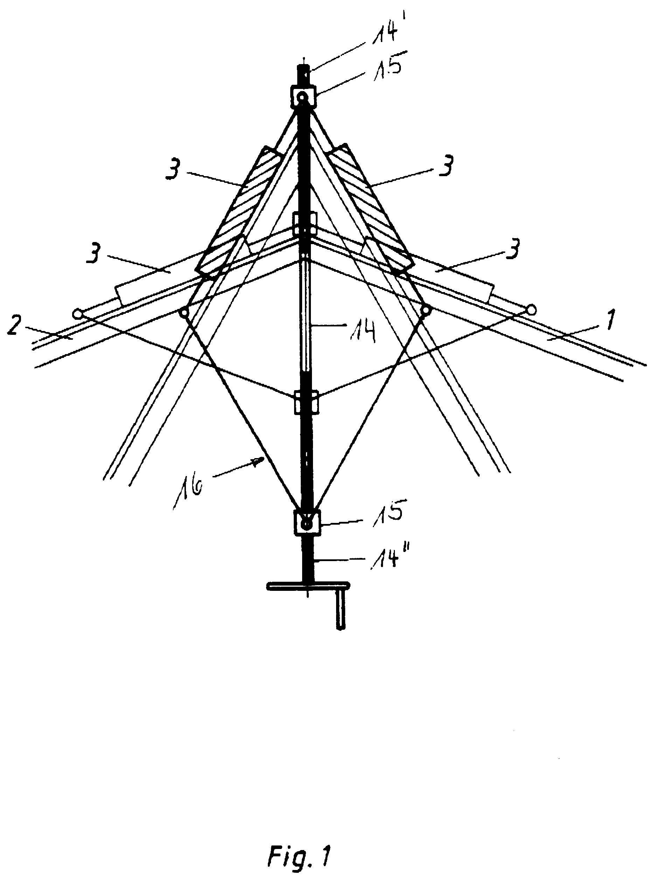

Die in Figur 1 dargestellte Aufnahme gemäß dem Stand der Technik weist zwei Anschläge 3 auf, welche jeweils auf den Außenseiten der Profilstücke 1, 2 eines Rahmens zu liegen kommen. Die Einstellung der Anschläge 3 auf den Winkel des jeweiligen Rahmenecks erfolgt mittels einer Stellspindel 14 mit einem Links- 14' und einem Rechtsgewindeabschnitt 14'' mit Stellmuttern 15, an welchen die Enden eines Gelenkvierecks 16 angreifen. Dabei wandert abhängig von der Schwenklage der Anschläge 3, bspw. im Falle eines stumpfwinkligen oder eines spitzwinkligen Rahmenecks, die äußere Bearbeitungskante auf einer Geraden längs der Spindel 14 hin und her. Die äußere Bearbeitungskante des Rahmenecks sollte jedoch immer an der gleichen Stelle liegen, so daß unabhängig vom Profil bzw. von der Profilbreite und den von den Profilschenkeln 1, 2 eingeschlossenen Winkeln der Verfahrweg der Bearbeitungswerkzeuge bis zum Rahmenaußeneck stets minimal ist.

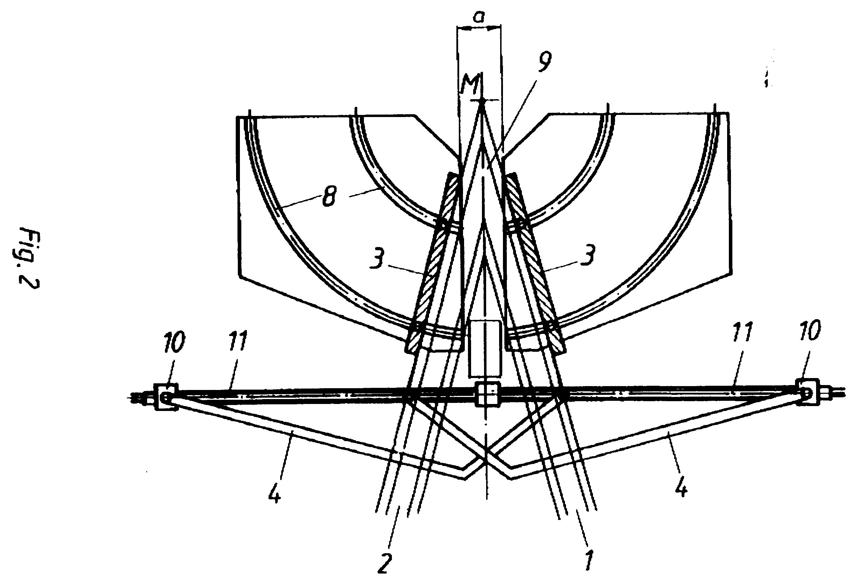

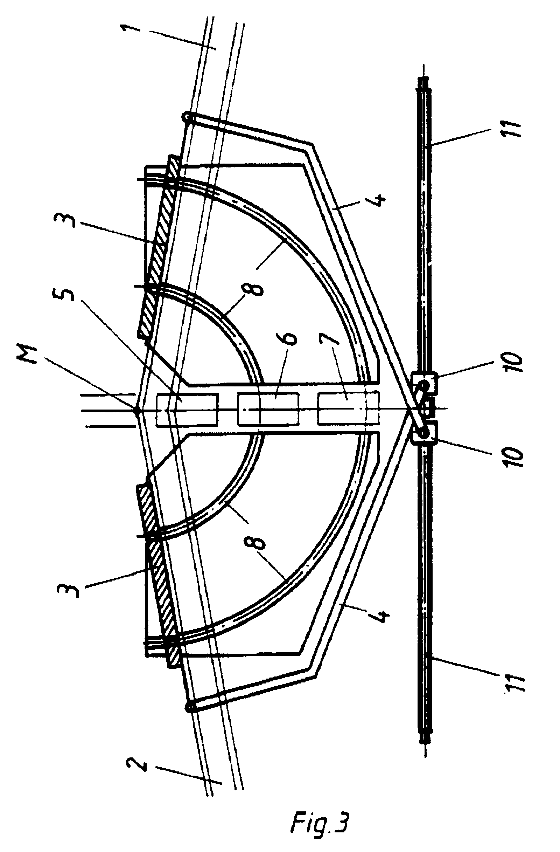

Hierfür ist es bei den Aufnahmen gemäß Figuren 2 bis 5 vorgesehen, daß die Anschläge 3 an kreissegmentförmigen Führungen 8 geführt sind, deren Kreismittelpunkt M auf einer Geraden liegt, welche durch die Bewegungsrichtung der Bearbeitungswerkzeuge 5 - 7 in Arbeitsstellung festgelegt ist. Wie aus dem Vergleich der Figuren 2 und 3 ersichtlich, kommt damit die äußerste Kante des zu bearbeitenden Rahmenecks unabhängig von dem durch die Profilschenkel 1, 2 eingeschlossenen Winkel und unabhängig von der Breite des Profils oder der Profilart stets an der gleichen Stelle zu liegen, so daß der Verfahrweg der Bearbeitungswerkzeuge 5 - 7 zum Bearbeiten des Rahmenaußenecks oder der Sichtfläche stets minimal ist. Dabei sind die unterhalb der (nicht dargestellten) Auflage für den Rahmen angeordneten Kreissegmentführungen 8 mit einem Abstand a gegeneinander angeordnet, so daß ein Freiraum 9 für die Bearbeitungswerkzeuge zur Bearbeitung der Unterseite des Rahmenecks verbleibt.

Die Verstellung der Anschläge 3 erfolgt über Hebelarme 4, welche mit ihrem einen Ende an dem jeweiligen Anschlag 3 und mit ihrem anderen Ende unter Kreuzung der Hebelarme 4 an Muttern 10 von Spindeln 11 mit entgegengesetzten Gewindegängen angelenkt sind. Diese Spindeln 11 mit Links- und Rechtsgewinde befinden sich ebenfalls außerhalb des Bearbeitungsbereichs 9 der Bearbeitungswerkzeuge 5 - 7 und sind bei dem hier gewählten Ausführungsbeispiel im rechten Winkel zur Verfahrrichtung der Bearbeitungswerkzeuge 5 - 7 angeordnet. Hierdurch ist bei geringem konstruktiven Aufwand eine Zwangskopplung der beiden leistenförmigen Anschlägen 3 bei ihrer Verstellung erreicht, wobei sichergestellt ist, daß der Bearbeitungsbereich 9 der Bearbeitungswerkzeuge 5 - 7 frei von dem Betätigungsmechanismus für die Verstellung der Anschläge 3 ist. Damit ist eine Bearbeitung des auf der Aufnahme aufliegenden Rahmens auch an seiner Unterseite simultan mit der Bearbeitung auf seiner Oberseite oder zeitversetzt möglich, ohne daß der Rahmen dabei gewendet werden muß.

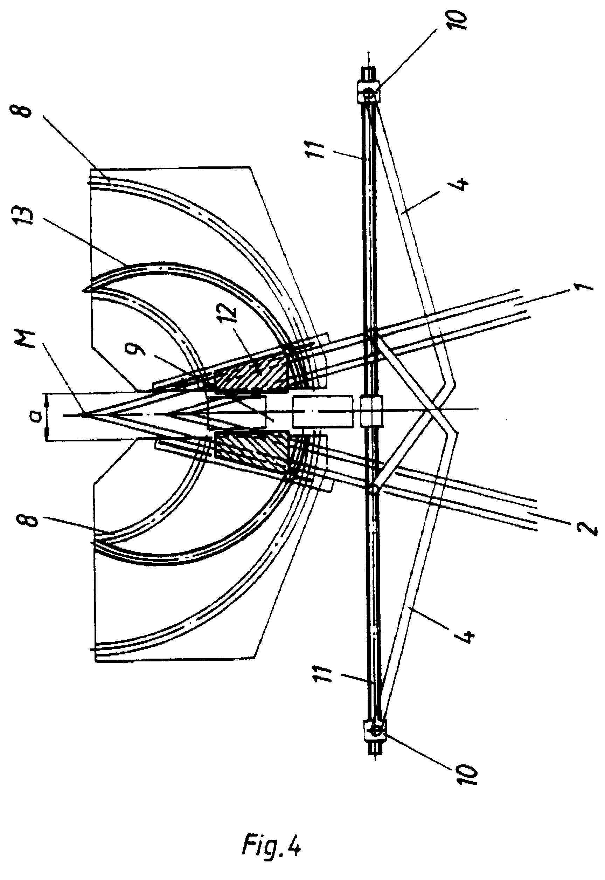

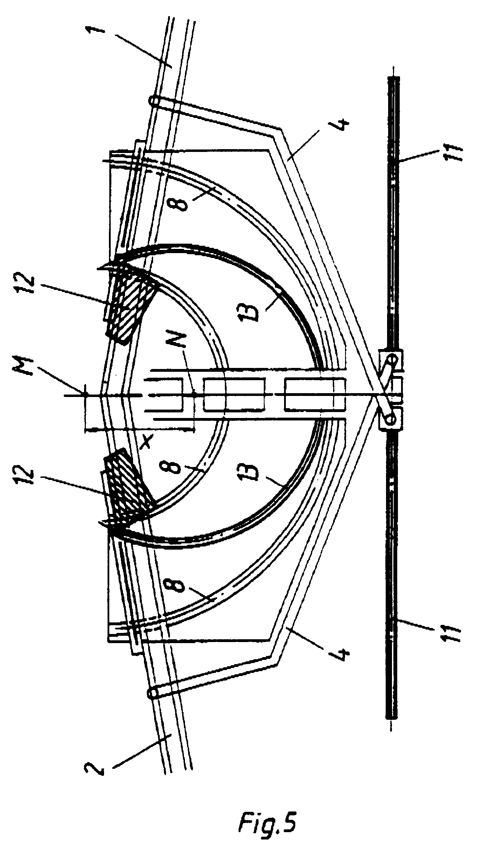

Zur Festlegung des Rahmens auf der Aufnahme bzw. Auflage sind gemäß Figuren 4 und 5 Spannmittel 12 vorgesehen, welche bspw. als Stempel ausgebildet sind und auf der Oberseite des Rahmens angreifen, um diesen auf die Auflage zu pressen. Die Spannmittel 12 sind längsverschieblich an den Anschlägen 3 angeordnet derart, daß die Spannmittel 12 mit kleiner werdendem Winkel zwischen den Anschlägen 3 an diesen nach außen verschoben werden (vgl. Figur 4) und bei sich vergrößerndem Winkel zwischen den Anschlägen 3 nach innen in Richtung des Kreismittelpunktes M der Kreissegmentführungen 8 verschoben werden, wie dies in Figur 5 dargestellt ist. Wären im Gegensatz dazu die Spannmittel 12 fest an den Anschlägen 3 angeordnet und soweit nach außen verlagert, daß auch bei spitzwinkligen Rahmen entsprechend demjenigen gemäß Figur 4 ein genügender Freiraum für die Bearbeitungswerkzeuge 5 - 7 vorhanden ist, so wären bei stumpfwinkligen Rahmens, wie demjenigen gemäß Figur 5 die Spannmittel 12 zu weit von der zu bearbeitenden Ecke entfernt, so daß das Rahmeneck bei der Bearbeitung vibrieren würde.

Die Längsverschiebung der Spannmittel 12 in die jeweilige Richtung an den Anschlägen 3 erfolgt bei dem hier gewählten Ausführungsbeispiel selbsttätig durch die Verstellung der Anschläge 3. Hierfür sind die Spannmittel 12 an, vorzugsweise in einer Ebene der Kreissegmentführungen 8 für die Anschläge 3 angeordneten, ebenfalls kreissegmentförmig ausgebildeten Führungen 13 gelagert, deren Kreismittelpunkt N gegenüber dem Kreismittelpunkt M der Kreissegmentführungen 8 für die Anschläge 3 um einen Abstand X auf der durch die Bewegungsrichtung der Bearbeitungswerkzeuge 5 - 7 festgelegten Gerade versetzt ist. Der Abstand X ergibt sich daraus, wie die Spannmittel 12 bei den jeweils vorkommenden Rahmen mit unterschiedlichen Winkeln verschoben werden müssen, bspw. zwischen 160° bei stumpfwinkligen und 30° bei spitzwinkligen Rahmen.. Hierdurch ist eine vollautomatische Bearbeitung der Rahmen, unabhängig von Rahmenbreite, vom Rahmentyp und Winkel ermöglicht, ohne daß es zu Fehlfunktionen durch den Bediener kommen kann.

Selbstverständlich ist es auch möglich, die erfindungsgemäße Vorrichtung zur Bearbeitung von aus Holzprofilstücken zusammengefügten Rahmen mit Vorteil einzusetzen.

### Bezugszeichenliste

- 1 -: Profilstück
- 2 -: Profilstück
- 3 -: Anschlag
- 4 -: Hebelarm
- 5 -: Bearbeitungswerkzeug
- 6 -: Bearbeitungswerkzeug
- 7 -: Bearbeitungswerkzeug
- 8 -: Kreissegmentführungen
- 9 -: Freiraum, Bearbeitungsbereich
- 10 -: Mutter
- 11 -: Spindel
- 12 -: Spannmittel
- 13 -: Kreissegmentführungen
- 14 -: Stellspindel
- 14' -: Linksgewindeabschnitt
- 14''-: Rechtsgewindeabschnitt
- 15 -: Stellmutter
- 16 -: Gelenkviereck
- M -: Mittelpunkt
- N -: Mittelpunkt
- a -: Abstand
- X -: Abstand

## Patentansprüche

1. Vorrichtung zum Bearbeiten der Rahmenecken von aus Kunststoff- oder Metallprofilstücken geschweißten oder aus Holzprofilstücken zusammengefügten Rahmen, wie bspw. Fenster- oder Türrahmen, mittels wenigstens einem verfahrbaren Bearbeitungswerkzeug (5 - 7), mit an den Rahmenaußenseiten zu liegen kommenden verschwenkbaren Anschlägen (3), dadurch gekennzeichnet, daß die Anschläge (3) an kreissegmentförmigen Führungen (8) geführt sind, deren Kreismittelpunkt (M) auf einer Geraden liegt, welche durch die Bewegungsrichtung des wenigstens einen Bearbeitungswerkzeuges (5 - 7) in Arbeitsstellung festgelegt ist.

2. Vorrichtung nach Anspruch 1, dadurch gekennzeichnet, daß die Kreissegmentführungen (8) unter Bildung eines Freiraumes (9) für das wenigstens eine Bearbeitungswerkzeug (5 - 7) zur Bearbeitung der Rahmenunterseite mit seitlichem Abstand (a) voneinander angeordnet sind.

3. Vorrichtung nach Anspruch 1 oder 3, dadurch gekennzeichnet, daß die Anschläge (3) für eine simultane Schwenkbewegung zwangsgekoppelt sind.

4. Vorrichtung nach einem der Ansprüche 1 bis 2, dadurch gekennzeichnet, daß die Verstellung der Anschläge (3) über Hebelarme (4) erfolgt, welche mit ihrem einen Ende an dem jeweiligen Anschlag (3) und mit ihrem anderen Ende unter Kreuzung ihrer Hebelarme (4) an Muttern (10) von Spindeln (11) mit entgegengesetzten Gewindegängen angelenkt sind.

5. Vorrichtung nach Anspruch 4, dadurch gekennzeichnet, daß die Spindeln (11) außerhalb des Bearbeitungsbereiches (9) der Bearbeitungswerkzeuge (5 - 7) und vorzugsweise im rechten Winkel zur Verfahrrichtung des wenigstens einen Bearbeitungswerkzeuges (5 - 7) angeordnet sind.

6. Vorrichtung nach einem der vorhergehenden Ansprüche, dadurch gekennzeichnet, daß für die Verschwenkung der Anschläge (3) eine elektrische oder pneumatische Betätigungseinrichtung vorgesehen ist.

7. Vorrichtung nach einem der vorhergehenden Ansprüche, dadurch gekennzeichnet, daß Spannmittel (12) zur Festlegung des Rahmens vorgesehen sind, die längsverschieblich an den Anschlägen (3) angeordnet sind.

8. Vorrichtung nach Anspruch 7, dadurch gekennzeichnet, daß die Spannmittel (12) so an den Anschlägen angeordnet sind, daß sie durch Verschwenken der Anschläge (3) an diesen verschoben werden.

9. Vorrichtung nach Anspruch 7 oder 8, dadurch gekennzeichnet, daß die Spannmittel (12) an, vorzugsweise in einer Ebene der Kreissegmentführungen (8) für die Anschläge (3) angeordneten, ebenfalls kreissegmentförmig ausgebildeten Führungen (13) gelagert sind, deren Kreismittelpunkt (N) gegenüber dem Kreismittelpunkt (M) der Kreissegmentführungen (8) für die Anschläge (3) um einen Abstand (X) auf der durch die Bewegungsrichtung des wenigstens einen Bearbeitungswerkzeuges (5 - 7) festgelegten Gerade versetzt ist, derart, daß die Spannmittel mit kleiner werdendem Winkel zwischen den Anschlägen (3) an diesen nach außen und bei sich vergrößerndem Winkel zwischen den Anschlägen (3) an diesen nach innen in Richtung des Kreismittelpunktes (M) der Kreissegmentführungen (8) verschoben werden.

10. Vorrichtung nach einem oder mehreren der vorangegangenen Ansprüche, dadurch gekennzeichnet, daß die Kreissegmentführungen (8 bzw. 13) für die Anschläge (3) und/oder für die Spannmittel (12) unterhalb der Auflage für den Rahmen angeordnet sind.

## Claims

1. Device for machining frame corners of frames welded from synthetic material or metal profile members or assembled from wood profile members, such as for example window or door frames, by means of at least one movable machining tool (5 to 7), with pivotable abutments (3) which come to lie against the frame outer sides, characterised thereby that the abutments (3) are guided at guides (8) which are of circular segment shape and the circle centre point (M) of which lies on a straight line which is established by the movement direction of the at least one machining tool (5 to 7) in working position.

2. Device according to claim 1, characterised thereby that the circular segment guides (8) are arranged at a lateral spacing (a) from one another whilst forming a free space (9) for the at least one machining tool (5 to 7) for the machining of the frame underside.

3. Device according to claim 1, characterised thereby that the abutments (3) are constrainedly coupled for a simultaneous pivot movement.

4. Device according to one of claims 1 to 2, characterised thereby that the adjusting of the abutments (3) is effected by way of lever arms (4), which are articulated by their one end to the respective abutment (3) and by their other end and with crossing of their lever arms (4) to nuts (10) of spindles (11) with opposed thread pitches.

5. Device according to claim 4, characterised thereby that the spindles (11) are arranged outside the machining range (9) of the machining tools (5 to 7) and preferably at a right angle to the movement direction of the at least one machining tool (5 to 7).

6. Device according to one of the preceding claims, characterised thereby that electric or pneumatic actuating equipment is provided for pivotation of the abutments (3).

7. Device according to one of the preceding claims, characterised thereby that clamping means (12) for fixing the frame are provided, which are arranged to be longitudinally displaceable at the abutments (3).

8. Device according to claim 7, characterised thereby that the clamping means (12) are so arranged at the abutments that they are displaced at the abutments (3) by pivolation thereof.

9. Device according to claim 7 or 8, characterised thereby that the clamping means (12) are mounted at guides (13), which are preferably arranged in a plane of the circular segment guides (8) for the abutments (3), are equally formed to be of circular segment shape, and the circle centre point (N) of which is offset relative to the circle centre point (M) of the circular segment guides (8) for the abutments (3) by a spacing (X) on the straight line established by the movement direction of the at least one machining tool (5 to 7), in such a manner that the clamping means are displaced at a reducing angle between the abutments (3) outwardly thereat and with enlarging angle between the abutments (3) inwardly thereat in the direction of the circle centre point (M) of the circular segment guides (8).

10. Device according to one or more of the foregoing claims, characterised thereby that the circular segment guides (8 or 13) for the abutments (3) and/or for the clamping means (12) are arranged below the support for the frame.

## Revendications

1. Dispositif pour le traitement des angles de châssis formés par soudage de pièces profilées en matière plastique ou en métal ou formées par assemblage de pièces profilées en bois, comme par exemple des châssis de fenêtres ou de portes, à l'aide d'au moins un outil mobile de traitement (5-7), comportant des butées pivotantes (3) qui viennent s'appliquer contre les faces extérieures du châssis, caractérisé en ce que les butées (3) sont guidées sur des guides en forme de segments de cercle (8), dont le centre (M) est situé sur une droite qui est fixée par la direction de déplacement du au moins un outil de travail (5-7) dans la position de travail.

2. Dispositif selon la revendication 1, caractérisé en ce que les guides en forme de segments de cercle (8) sont disposés à une distance latérale (a) les uns avec les autres en définissant un espace libre (9) pour le au moins un outil de travail (5-7) pour l'usinage de la face inférieure du châssis.

3. Dispositif selon la revendication 1 ou 3, caractérisé en ce que les butées (3) sont couplées selon un accouplement forcé pour un mouvement simultané de pivotement.

4. Dispositif selon l'une des revendications 1 à 2, caractérisé en ce que le déplacement des butées (3) est réalisé au moyen de bras de levier (4), qui sont articulés par une de leurs extrémités sur la butée respective (3) et par leur autre extrémité, moyennant un croisement de leurs bras de levier (4), sur des écrous (10) de broches (11) possédant des filetages tournants en des sens opposés.

5. Dispositif selon la revendication 4, caractérisé en ce que les broches (11) sont disposées à l'extérieur de la zone de traitement (9) des outils de travail (5-7) et de préférence à angle droit par rapport à la direction de déplacement du au moins un outil de traitement (5-7).

6. Dispositif selon l'une des revendications précédentes, caractérisé en ce que pour le pivotement des butées (3), il est prévu un dispositif d'actionnement électrique ou pneumatique.

7. Dispositif selon l'une des revendications précédentes, caractérisé en ce que pour fixer le châssis il est prévu des moyens de serrage (12), qui sont disposés de manière à être déplaçables longitudinalement sur les butées (3).

8. Dispositif selon la revendication 7, caractérisé en ce que les moyens de serrage (12) sont disposés sur les butées de telle sorte qu'ils sont déplacés sur les butées (3), par pivotement de ces dernières.

9. Dispositif selon la revendication 7 ou 8, caractérisé en ce que les moyens de serrage (12) sont montés sur des guides (13) disposés de préférence dans un plan des guides en forme de segments de cercle (8) pour les butées (3) et également agencés en forme de segments de cercle et dont le centre (N) est décalé par rapport au centre (M) des guides en forme de segments de cercle (8) pour les butées (3), d'une distance (X) sur la droite, qui est fixée par la direction de déplacement du au moins un outil de traitement (5-7), de telle sorte que, lorsque l'angle entre les butées (3) diminue, les moyens de serrage sont déplacés sur ces dernières vers l'extérieur et, dans le cas où l'angle entre les butées (3) augmente, les moyens de serrage sont déplacés sur les butées vers l'intérieur, en direction du centre (M) des guides en forme de segments de cercle (8).

10. Dispositif selon une ou plusieurs des revendications précédentes, caractérisé en ce que les guides en forme de segments de cercle (8 ou 13) pour les butées (3) et/ou pour les moyens de serrage (12) sont disposés au-dessous de l'appui pour le châssis.
